(19) Europäisches Patentamt
European Patent Office
Office européen des brevets

(11) Veröffentlichungsnummer: **0 475 228 A2**

## (12) EUROPÄISCHE PATENTANMELDUNG

(21) Anmeldenummer: **91114706.4**

(22) Anmeldetag: **31.08.91**

(51) Int. Cl.⁵: **C08G 59/50**, C08L 63/08, C09D 5/44

(30) Priorität: **14.09.90 DE 4029199**

(43) Veröffentlichungstag der Anmeldung:
**18.03.92 Patentblatt 92/12**

(84) Benannte Vertragsstaaten:
**AT BE CH DE DK ES FR GB IT LI NL SE**

(71) Anmelder: **BASF Lacke + Farben Aktiengesellschaft**
**Max-Winkelmann-Strasse 80**
**W-4400 Münster(DE)**

(72) Erfinder: **Faul, Dieter, Dr.**
**Goethestrasse 4**
**W-6702 Bad Duerkheim(DE)**
Erfinder: **Hoffmann, Gerhard, Dr.**
**Pappelstrasse 22**
**W-6701 Otterstadt(DE)**
Erfinder: **Huemke, Klaus, Dr.**
**Buhlscher Hof 4**
**W-6701 Friedelsheim(DE)**
Erfinder: **Heimann, Ulrich, Dr.**
**Schlagholz 28**
**W-4400 Muenster(DE)**
Erfinder: **Gilbert, John A., Dr.**
**Emil.-Nolde-Weg 71 a**
**W-4400 Muenster(DE)**

(74) Vertreter: **Langfinger, Klaus-Dieter, Dr. et al**
**BASF AG Carl-Bosch-Strasse 38**
**W-6700 Ludwigshafen(DE)**

(54) **Polymere Umsetzungsprodukte.**

(57) Polymere Umsetzungsprodukte, welche erhältlich sind aus

A. im Mittel 1,5 bis 3,0 primäre und/oder sekundäre Aminogruppen enthaltenden Polyoxyalkylenen mit einem mittleren Molekulargewicht $\overline{M}_n$ von 140 bis 10.000 und

B. einem Polymerisat auf Basis von konjugierten Dienen mit einem mittleren Molekulargewicht $\overline{M}_n$ von 250 bis 50.000, welches pro Molekül im Mittel von 1,5 bis 3,0 Epoxidgruppen trägt und durch Umsetzung von hydroxyl- oder carboxylgruppentragenden Polymerisaten mit Glycidylverbindungen erhältlich ist.

Wäßrige Dispersionen dieser Umsetzungsprodukte lassen sich als Zusätze zu Elektrotauchlackierbädern verwenden.

Die vorliegende Erfindung betrifft polymere Umsetzungsprodukte, welche erhältlich sind aus

A. im Mittel 1,5 bis 3,0 primäre und/oder sekundäre Aminogruppen enthaltenden Polyoxyalkylenen mit einem mittleren Molekulargewicht $\overline{M}n$ von 140 bis 10.000 und

B. einem Polymerisat auf Basis von konjugierten Dienen mit einem mittleren Molekulargewicht $\overline{M}n$ von 250 bis 50.000, welches pro Molekül im Mittel von 1,5 bis 3,0 Epoxidgruppen trägt und durch Umsetzung von hydroxyl- oder carboxylgruppentragenden Polymerisaten mit Glycidylverbindungen erhältlich ist,

wobei die Menge an (A) so bemessen wird, daß pro Epoxidgruppe der Komponente (B) 1,3 bis 3,0 Aminogruppen der Komponente (A) vorhanden sind.

Weiterhin betrifft die Erfindung wäßrige Dispersionen, die solche polymeren Umsetzungsprodukte enthalten, sowie die Verwendung solcher Dispersionen als Zusatz zu Standard-Elektrotauchbädern.

Seit einigen Jahren wird die Forderung der Automobilhersteller nach kathodisch abscheidbaren Grundierungen für Mehrschicht-Autolack-Systeme, die diesen Lacksystemen neben einer guten Korrosionsresistenz auch eine hohe Steinschlagfestigkeit verleihen, immer lauter. Die hohen Anforderungen an die Steinschlagfestigkeit haben im wesentlichen zwei Ursachen:

-  Die Umstellung der kommunalen Winterstreudienste von Salz auf Splitt bzw. Splitt/Salz-Mischungen.
-  Die aufgrund aerodynamischer Gesichtspunkte immer tiefer heruntergezogenen flachen Karosseriefronten der Automobile.

In der EP-B 70550 werden wäßrige Dispersionen für die kathodische Tauchlackierung beschrieben, in denen Kunstharze, die durch Umsetzung von Polyepoxiden auf Basis von Bisphenol A mit Polyoxyalkylenpolyaminen erhältlich sind, als Bindemittel verwendet werden.

Aus der deutschen Patentanmeldung P 3906145.0 sind mittels kathodischer Tauchlackierung erhältliche zweiphasige Überzüge bekannt, die durch Abscheidung einer Mischung von zwei Dispersionen, deren zugrundeliegende Bindemittel untereinander unverträglich sind, erhalten wird.

Bisher bekannte Systeme erfüllen jedoch noch nicht alle Anforderungen bezüglich hervorragender Steinschlagfestigkeit bei gleichzeitigem gutem Korrosionsschutz und unter Erhalt aller sonstigen guten anwendungstechnischen Eigenschaften.

Aufgabe der vorliegenden Erfindung war es, Systeme zu entwickeln, die ein hervorragendes Eigenschaftsprofil sowohl bezüglich Steinschlagfestigkeit als auch bezüglich Korrosionsfestigkeit aufweisen.

Demgemäß wurden die eingangs definierten polymeren Umsetzungsprodukte gefunden.

Als Komponenten (A) eignen sich Polyoxyalkylenderivate, die im Mittel 1,5 bis 3,0, vorzugsweise 1,8 bis 2,2, primäre und/oder sekundäre Aminogruppen tragen und ein mittleres Molekulargewicht $\overline{M}_n$ von 140 bis 10.000, vorzugsweise 300 bis 6000 aufweisen, wobei ein Bereich von 350 bis 1100 besonders bevorzugt ist.

Die Herstellung solcher Aminogruppen-tragenden Polyoxyalkylene ist allgemein bekannt. Sie lassen sich beispielsweise durch Michael-Addition von Acrylnitril an Hydroxylgruppen-terminierte Polyoxyalkylene mit anschließender Hydrierung der Nitrilgruppe herstellen, oder durch direkte Umsetzung der OH-funktionalisierten Verbindungen mit überschüssigem Ammoniak.

Als geeignete Polyoxyalkylene kommen solche Verbindungen in Betracht, deren Alkylenanteil 1 bis 12 Kohlenstoffatome enthält, beispielsweise Polyethylenoxid, Polypropylenoxid oder vorzugsweise Polytetrahydrofuran.

Besonders bevorzugte Aminogruppen-tragende Polyoxyalkylene sind solche, die in $\alpha$-Stellung zu einer primären Aminogruppe unsubstituierte Methylengruppen aufweisen wie Bis-(2-aminoethyl)-polyethylenoxid, Bis-(3-aminopropyl)-polyethylenoxid, Bis-(2-aminoethyl)-polypropylenoxid, Bis-(3-aminopropyl)-polypropylenoxidoder vorzugsweise Bis-(2-aminoethyl)-polytetrahydrofuran oder Bis-(3-aminopropyl)-polytetrahydrofuran.

Als Komponenten (B) kommen Polymerisate auf Basis von konjugierten Dienen mit einem Molekulargewicht $\overline{M}_n$ von 250 bis 50.000 in Betracht, welche im Mittel 1,5 bis 3,0 Epoxidgruppen pro Molekül tragen und durch Umsetzung von Hydroxyl- oder Carboxylgruppen-tragenden Polymerisaten mit Glycidylverbindungen erhältlich sind.

Die Polymerisate auf Basis konjugierter Diene können unter allgemein bekannten Bedingungen durch radikalische Polymerisation erhalten werden. Als Dienmonomere kommen beispielsweise Isopren oder Butadien in Betracht, wobei Butadien bevorzugt ist.

Zusätzlich können monoolefinisch ungesättigte Monomere wie beispielsweise Styrol, Acrylsäure, Acrylsäurealkylester von Mono- oder Dialkoholen, Acrylnitril oder Isobutylen copolymerisiert werden, wobei Acrylnitril bevorzugt ist.

Der Anteil an Comonomeren kann dabei im allgemeinen je nach Art des Comonomeren bis zu 45 Gew.-%, bezogen auf das Gesamtgewicht an Monomeren, betragen, wobei der Anteil an Comonomerem so bemessen wird, daß die Glasübergangstemperatur des entstehenden Copolymerisats im Bereich von -70 bis -30°C liegt, was dem Fachmann bekannterweise leicht möglich ist.

Bevorzugt werden Butadien/Acrylnitril-Copolymere mit einem Acrylnitril-Gehalt von 5 bis 45 Gew.-%, wobei ein Acrylnitril-Gehalt von 10 bis 30 Gew.-% besonders bevorzugt ist.

Geeignete Polymerisate auf Basis von Butadien sind mit Carboxyl- oder Hydroxylgruppen funktionalisiert.

Die Funktionalisierung erfolgt nach dem Fachmann bekannten Methoden. So kann beispielsweise bei der Polymerisation ein carboxylgruppenhaltiger Radikalstarter wie carboxyliertes Azobisisobutyronitril verwendet werden.

Die Hydroxylfunktionalisierung kann beispielsweise erfolgen, indem ein carboxylfunktionalisiertes Polymerisat mit Ethylenoxid umgesetzt wird.

Durch Umsetzung mit Glycidylverbindungen, die mit den funktionellen Gruppen reagieren können, werden epoxidhaltige Gruppierungen in die Polymermoleküle eingeführt.

So können die Hydroxyl-funktionalisierten Polymerisate durch Reaktion mit Epihalohydrin im alkalischen Medium epoximodifiziert werden.

Carboxylfunktionalisierte Polymerisate lassen sich durch Umsetzung mit Polyglycidylethern, die im Mittel 1,5 bis 3,0 Epoxidgruppen enthalten, wobei Diglycidylether bevorzugt sind, in die entsprechenden epoximodifizierten Verbindungen überführen.

Geeignete Polyglycidylether sind beispielsweise die Diglycidylether von aliphatischen $C_2$-$C_{18}$-Diolen wie Ethylenglykol, Propylenglykol, Butandiol, Pentandiol oder Hexandiol oder Polyglycidylether von mindestens zwei phenolische Hydroxylgruppen enthaltenden ein- oder mehrkernigen aromatischen Verbindungen wie beispielsweise Hydrochinon, 2,2-Bis-(4-hydroxyphenyl)-propan(Bisphenol A), Bis-(4-hyroxyphenyl)-methan (Bisphenol F), 4,4'-Dihydroxybenzophenon, 4,4'-Dihydroxybenzosulfon oder 1,5-Dihydroxynaphthalin.

Solche Glycidylether lassen sich ebenfalls in üblicher Weise durch Veretherung mit Epihalohydrin im alkalischen Medium herstellen.

Die Umsetzung der aminogruppenhaltigen Polyoxyalkylenkomponenten (A) mit den epoximodifizierten Polymerisaten (B) wird in der Regel so durchgeführt, daß man die beiden Komponenten in einem organischen Lösungsmittel oder Lösungsmittelgemisch, welches sich sowohl gegenüber Aminogruppen als auch Epoxidgruppen gegenüber inert verhält, bei Temperaturen von 20 bis 150°C, vorzugsweise 50 bis 110°C, umsetzt. Als Lösungsmittel kommen dabei in Betracht Toluol, Xylol, Benzol, Methylisobutylketon, Tetrahydrofuran, wobei Toluol bevorzugt ist.

Die Reaktionszeit kann zwischen 1 bis 16 Stunden liegen, wobei der Endpunkt der Reaktion dann erreicht ist, wenn der Epoxidwert praktisch gleich Null ist, was im Einzelfalle leicht ermittelt werden kann.

Üblicherweise erfolgt die Umsetzung unter Normaldruck.

Die Menge der Komponenten (A) und (B) wird so bemessen, daß pro Epoxidequivalent der Komponente (B) 1,3 bis 3,0, vorzugsweise 1,7 bis 2,3 Aminoequivalente der Komponente (A) vorhanden sind.

Die so erhaltenen polymeren Umsetzungsprodukte haben im allgemeinen Aminzahlen von 10 bis 100 mg, vorzugsweise 20 bis 60 mg, KOH/g Festsubstanz.

Die mittleren Molekulargewichte $\overline{M}_n$ können von 500 bis 150.000 betragen.

Nach Beendigung der Epoxid-Aminreaktion kann man die Aminogruppen ganz oder teilweise mit Säure neutralisieren und das protonierte Harz mit Wasser dispergieren. Als Säuren kommen Phosphorsäure, bevorzugt jedoch organische Säuren, wie beispielsweise Ameisensäure, Essigsäure, Propionsäure oder Milchsäure in Betracht. Es ist auch möglich, das Harz in ein Wasser/Säure-Gemisch zu geben und dann durch Rühren zu dispergieren. Anschließend können die organischen Lösungsmittel azeotrop abdestilliert werden.

Die so erhaltenen Dispersionen weisen einen Feststoffgehalt von 15 bis 40 % auf und können Standard-Elektrotauchlackierbädern zugesetzt werden.

Dabei werden die Dispersionen in Mengen von 5 bis 30 Gew.-%, vorzugsweise 8 bis 20 Gew.-%, bezogen auf den Polymergehalt des Elektrotauchbades, verwendet.

Geeignete Standard-Elektrotauchbäder enthalten als Grundharze basische Polymere, die als basische Gruppen primäre, sekundäre oder tertiäre Aminogruppen tragen. Es lassen sich auch Grundharze verwenden, die Phosphonium- oder Sulfoniumgruppen tragen. In aller Regel enthalten diese Grundharze zusätzlich noch funktionelle Grupen, z.B. Hydroxylgruppen oder ungesättigte Doppelbindungen.

Als derartige Grundharze, deren Molmasse vorzugsweise zwischen 2000 und 200 000 liegt, kommen Polymerisate, z.B. Aminoacrylat- und -methacrylatharze, Polyaddukte wie Aminopolyurethanharze und Polykondensate wie Aminoepoxidharze in Betracht.

Für Lackgrundierungen mit guten Korrosionsschutzeigenschaften werden als Grundharze bevorzugt Aminoepoxidharze eingesetzt. Aminoepoxidharze sind beispielsweise in der EP-A 134 983, der EP-A 165 556, der EP-A 167 029 oder in der DE-A 34 22 457 oder der DE-A 34 44 410 beschrieben.

Man erhält sie in an sich üblicher Weise durch Umsetzung von epoxidgruppenhaltigen Harzen mit gesättigten und/oder ungesättigten primären und/oder sekundären Aminen bzw. Aminoalkoholen. Als Epoxidharze kommen Verbindungen mit Mittel 1,5 bis 3, bevorzugt 2 Epoxidgruppen pro Molekül und mittleren Molekulargewichten von 300 bis 6000 in Betracht. Vor allem eignen sich Glycidylether von im Mittel 2 Hydroxygruppen im Molekül enthaltenden Polyphenolen, wobei als Phenolkomponente vor allem 2,2-Bis-(4-hydroxyphenyl)-propan (Bisphenol A) in Betracht kommt.

Epoxidharze mit höherem Molekulargewicht erhält man durch Umsetzung der oben genannten Diglycidylether mit einem Polyphenol wie 2,2-Bis-(4-hydroxyphenyl)-propan und weitere Umsetzung der so erhaltenen Produkte mit Epichlorhydrin zu Polyglycidylethern.

Das Aminoepoxidharz kann auch mit gesättigten oder ungesättigten Polycarbonsäuren modifiziert sein, beispielsweise mit Adipinsäure, Fumarsäure oder dimerer Fettsäure.

Man kann auch Grundharze verwenden, die zusätzlich mit halbblockierten Isocyanaten umgesetzt worden sind und selbstvernetzende Eigenschaften haben. Solche Harze sind beispielsweise in der EP-A-273 247 oder der US 4 692 503 beschrieben.

Falls die Grundharze keine selbstvernetzenden Gruppen tragen, muß vor dem Dispergieren noch ein Vernetzer zugesetzt werden.

Geeignete Vernetzer für diese Grundharze sind z.B. Harnstoffkondensationsprodukte wie sie in der DE-A 33 11 514 beschrieben sind oder phenolische Mannich-Basen gemäß der DE-A 34 22 457. In der EP-A 134 983 werden als weitere mögliche Vernetzer auch geblockte Isocyanate oder Aminoplastharze wie Harnstoff-Formaldehydharze, Melaminharze oder Benzoguanaminharze erwähnt.

Weiterhin können die Standard-Elektrotauchbäder noch Pigmentpasten und übliche Hilfsmittel enthalten. Pigmentpasten sind beispielsweise aus einem Reibharz und Pigmenten wie Titandioxid, Ruß oder Aluminiumsilikaten sowie Hilfs- und Dispergiermitteln erhältlich. Geeignete Reibharze sind beispielsweise in der EP-A-107 089 oder der EP-A-251 772 beschrieben.

Die Abscheidung der Lackfilme bei der kathodischen Elektrotauchlackierung erfolgt üblicherweise bei 20-35°C, vorzugsweise 26 bis 32°C, während 5-500 sec, vorzugsweise 60 bis 300 sec bei Abscheidespannungen von 50 - 500 V. Der zu beschichtende Gegenstand wird als Kathode geschaltet.

Anschließend können die Lackfilme bei Temperaturen im Bereich von 120-210°C, vorzugsweise 140 bis 180°C eingebrannt werden.

Die gehärteten kathodisch abgeschiedenen Überzüge sind zweiphasig und weisen nach DSC-Messungen (Differential Scanning Calorimetrie) zwei verschiedene Bereiche von Glasübergangstemperaturen $T_G$ auf. Dabei liegen die Glasübergangstemperaturen zum einen im Bereich von -70 bis -20°C, zum anderen im Bereich von +50 bis +100°C, wobei die niedrigen $T_G$-Werte den erfindungsgemäßen Zusätzen zuzuordnen sind und die höheren $T_G$-Werte den Standard-Bindemitteln.

Die erfindungsgemäßen Überzüge weisen eine hervorragende Elastizität und Korrosionsbeständigkeit auf und eignen sich hervorragend als Grundierungen für Mehrschichtlacksysteme, denen sie neben gutem Korrosionsschutzverhalten auch eine gute Resistenz gegen Steinschlagschäden verleihen.

Ein solches Mehrschichtlacksystem kann beispielsweise dreischichtig sein, wobei auf die kathodisch abgeschiedene Grundierungsschicht eine übliche Füllschicht, beispielsweise auf Polyesterbasis aufgebracht wird, worauf sich eine Deckschicht aus handelsüblichen Decklacken anschließt.

Zur Ermittlung der Steinschlagfestigkeit von Lackaufbauten stehen sowohl Einzel- wie auch Multischlag-Prüfgeräte zur Verfügung (vgl. hierzu Fa. Erichsen Techn. Beschreibung f. Steinschlag-Prüfgerät nach VA, Modell 508 (1983); Prüfvorschrift Nr. 3.14.3 von VW (1982); Prüfvorschrift Nr. 1081 der Fa. Renault (1973); DIN 53 154 (1974); ASTM D 2794-69; A. Zosel, farbe + lack 83 (1977), S. 9ff.; E. Ladstädter, farbe + lack 90 (1984), S. 646ff.; A 1683/83.

Zur Prüfung von Lacksystemen, die die erfindungsgemäßen KTL-Grundierungen enthalten, wurde der "Daimler-Benz-Hahnenpick"-Test (DIN 55 995, Verfahren A; Firma Erichsen Technische Beschreibung Modell 490 (1981)) bei einer Prüftemperatur von -20°C angewandt.

Der Test wird am 3-Schicht-Automobillackaufbau (KTL/Füller/Decklack) durchgeführt. Hierbei werden zwei Werte ermittelt: die Abplatzfläche von Decklack und Füller [mm$^2$] bei intakter KTL und der sog. Rostgrad, eine Note zwischen 0 und 5, die Anzahl und Ausmaß der Durchschläge bis zum Blech zum Ausdruck bringt.

Neben der Verwendung als Zusätze zu Elektrotauchlackierbädern kann man die erfindungsgemäßen polymeren Umsetzungsprodukte bzw. deren Dispersionen auch als Additive für andere Überzugs-Zusammensetzungen einsetzen, beispielsweise für wäßrige Grundierungen oder Lacke wie sie zur Kunststoffbeschichtung verwendet werden.

Herstellung der erfindungsgemäßen polymeren Umsetzungsprodukte

4

Allgemeine Vorschrift

Herstellung des Epoxy-terminierten Butadien-Acrylnitril-Copolymeren

2003 g eines Carboxyl-terminierten Bu/AN-Copolymeren mit einem mittleren Molekulargewicht $\overline{M}_n$ von 3600 und einem Acrylnitril-Gehalt von 17 Gew.-% wurden mit 376 g eines Bisphenol-A-Diglycidylethers mit einem Epoxidequivalentgewicht EEW von ca. 190 unter Rühren gemischt und anschließend noch 5,5 h bei 130°C gerührt, wobei der Endpunkt der Reaktion bei einer Säurezahl von < 1 mg KOH/g Festsubstanz erreicht war.

Als Aminogruppen-haltige Polyoxyalkylenkomponente wurden die in Tabelle 1 aufgelisteten Polytetrahydrofurandiamine eingesetzt.

Das epoximodifizierte Butadien-Acrylnitril-Copolymerisat wurde in Toluol gelöst, mit dem entsprechenden Polytetrahydrofurandiamin versetzt und mehrere Stunden (s. Tabelle 2) bei der dort angegebenen Temperatur gerührt, bis der Epoxidwert praktisch gleich null war.

Tabelle 1

| Beispiel | Polytetrahydrofurandiamin | $\overline{M}_n$ | AEW |
|----------|---------------------------|------|-----|
| P1 | Bis-(4-aminobutyl)polytetrahydrofuran | 5200 | 3117 |
| P2 | Bis-(3-aminopropyl)polytetrahydrofuran | 2100 | 1057 |
| P3 | Bis-(3-aminopropyl)polytetrahydrofuran | 1100 | 532 |
| P4 | Bis-(3-aminopropyl)polytetrahydrofuran | 750 | 376 |
| P5 | Bis-(3-aminopropyl)polytetrahydrofuran | 350 | 177 |

Tabelle 2

| Beispiel | H1 | H2 | H3 | H4 | H5 | H6 | H7 | H8 |
|----------|-----|-----|-----|-----|-----|-----|-----|-----|
| Poly-THF-diamin [g] | P1 498,7 | P2 338,1 | P3 236,7 | P3 213,0 | P4 188,0 | P4 170,4 | P4 112,8 | P5 113,5 |
| Epoxid-terminiertes Bu-AN-Copolymerisat [g] | 160,0 | 320,0 | 444,4 | 470,6 | 500,0 | 533,3 | 409,5 | 655,2 |
| Toluol [g] | 282,3 | 282,3 | 291,9 | 293,0 | 294,9 | 301,6 | 227,7 | 329,4 |
| Reaktions-temperatur [°C] | 100 | 100 | 100 | 100 | 100 | 105 | 105 | 80 |
| Reaktionszeit [h] | 16 | 13 | 10 | 9 | 11 | 7 | 2 | 3 |
| Aminzahl [mg KOH/g Festsubstanz] | 13,7 | 27,2 | 31,5 | 30,0 | 37,9 | 35,0 | 33,8 | 46,9 |

Herstellung der Dispersionen D1 bis D6 aus den polymeren Umsetzungsprodukten H3 bis H8

Allgemeine Vorschrift:

Die polymeren Umsetzungsprodukte H3 bis H8 werden mit den in Tabelle 3 angegebenen Mengen Isobutanol und Ethylenglykolmonobutylether verdünnt, auf 40°C gekühlt, mit Essigsäure neutralisiert und anschließend mit der angegebenen Menge deionisiertem Wasser dispergiert. Danach wird unter vermindertem Druck ein großer Teil der organischen Lösungsmittel azeotrop abdestilliert und gleichzeitig der Feststoffgehalt mit deionisiertem Wasser eingestellt.

Tabelle 3

| Beispiel | D1 | D2 | D3 | D4 | D5 | D6 |
|---|---|---|---|---|---|---|
| Menge Harzlösung [g] | H3 | H4 | H5 | H6 | H7 | H8 |
| | 285,7 | 333,3 | 285,7 | 333,3 | 400,0 | 285,7 |
| Isobutanol [g] | 102,9 | 60,3 | 102,9 | 60,3 | 265,9 | 73,1 |
| Ethylenglykol-monobutylether [g] | 11,4 | 6,3 | 11,4 | 6,3 | 29,5 | 41,2 |
| Essigsäure [g] | 3,4 | 3,2 | 4,1 | 3,2 | 3,6 | 5,0 |
| Wasser [g] | 600,0 | 600,0 | 600,0 | 600,0 | 600,0 | 600,0 |
| Feststoffgehalt [Gew.-%] | 30,3 | 28,6 | 25,8 | 26,6 | 24,4 | 20,7 |

Eleketrotauchbäder

A. Herstellung der Standard-Elektrotauchbad-Komponenten gemäß der deutschen Patentanmeldung P 3906144.2

a) Herstellung des Grundharzes

a1) Ein Gemisch aus 5800 g Hexamethylendiamin, 7250 g Dimerfettsäure und 1400 g Leinölfettsäure wurde langsam auf 195°C erhitzt, wobei das entstehende Wasser (540 g) abdestilliert wurde. Anschließend wurde das Gemisch auf 100°C abgekühlt und mit 5961 g Toluol auf einen Festgehalt von 70 Gew.% verdünnt. Das Produkt hatte eine Aminzahl von 197 mg KOH/g Substanz.

a2) In einem zweiten Rührgefäß wurden 10 Äquivalente eines Diglycidylethers auf Basis von Bisphenol A und Epichlorhydrin mit einem Äquivalentgewicht von 485 in einem Lösungsmittelgemisch aus 1039 g Toluol und 1039 g Isobutanol unter Erwärmen gelöst. Die so entstandene Lösung wurde auf 60°C gekühlt und mit 300,4 g Methylethanolamin und 128 g Isobutanol versetzt, wobei die Temperatur innerhalb von 5 min auf 78°C anstieg. Danach wurden 1850 g des nach a1) erhaltenen Kondensationsproduktes zugegeben und die Mischung 2 Stunden auf 80°C erwärmt.

b) Herstellung der Pigmentpaste

Zu 525,8 g des nach a) erhaltenen Bindemittels wurden 168,7 g Butylglykol, 600 g Wasser und 16,5 g Essigsäure gegeben. Dann wurden 800 g Titandioxid, 11 g Ruß und 50 g basisches Bleisilicat zugegeben und die Mischung auf einer Kugelmühle bis zu einer Korngröße kleiner 9 $\mu$m gemahlen. Anschließend wurde mit Wasser ein Feststoffgehalt von 47 Gew.% eingestellt.

c) Herstellung des Vernetzers

Eine Mischung aus 1,32 kg Toluol, 0,42 kg Trimethylolpropan und 0,72 kg Bisphenol A wurde bei 60°C so lange gerührt, bis eine homogene Lösung entstanden war. Diese Lösung wurde zu einem auf 60°C erwärmten Gemisch aus 3,45 kg Isophorondiisocyanat, 0,86 kg Toluol und 0,0034 kg Dibutylzinndilaurat gegeben. Das Gemisch wurde 2 h bei einer Temperatur von 60°C gehalten und dann mit 2,0 kg Dibutylamin versetzt, wobei die Zugabegeschwindigkeit so eingestellt wurde, daß die Temperatur des Reaktionsgemisches 80°C nicht überstieg. Anschließend wurden 1,11 kg Toluol zugegeben und noch 1 h bei 80°C gehalten.

B. Herstellung der Elektrotauchbäder

Beispiele B1 bis B8

700 g des nach a) erhältlichen Bindemittels und 300 g des Vernetzers c) wurden unter Zusatz von 19 g Essigsäure mit soviel Wasser dispergiert, daß man eine Dispersion mit einem Feststoffgehalt von 31 Gew.% erhielt. Anschließend wurden organische Lösungsmittel als Azeotrop abdestilliert und danach mit Wasser ein Feststoffgehalt von 35 Gew.% eingestellt.

Die so erhaltene Dispersion wurde mit 775 g der nach b) erhältlichen Pigmentpaste und wechselnden Mengen der erfindungsgemäßen Dispersionen vermischt und mit Wasser auf ein Volumen von 5000 ml aufgefüllt.

Die Elektrotauchbäder wurden 168 Stunden bei 30°C gerührt. An kathodisch geschalteten zinkphosphatierten Prüftafeln aus Stahl wurden innerhalb von 120 Sekunden Lackfilme abgeschieden. Anschließend wurden diese Lackfilme 20 min bei 155°C eingebrannt.

Die Zusammensetzung der Bäder, die Abscheidebedingungen und die Prüfergebnisse sind in Tabelle 4 aufgelistet.

Herstellung von dreischichtigen Überzügen zur Bestimmung der Steinschlagfestigkeit nach DBE

Auf die gemäß den Beispielen B1 bis B8 erhaltenen kathodisch abgeschiedenen Grundierungen wurden durch Spritzapplikation zunächst eine Füllschicht und anschließend eine Decklackschicht aufgebracht. Für die Füllschicht wurde BASF Füller FC 80-0100 auf Polyesterbasis mit einer Schichtdicke von 35 bis 40 $\mu$m aufgebracht und 25 min bei 155°C eingebrannt.

Für die Decklackschicht wurde ein Zwei-Komponenten-High Solid Decklack FD 73-0782 (2K-HS) der Fa. BASF verwendet, der bei einer Schichtdicke von 35 bis 40 $\mu$m 30 min bei 130°C eingebrannt wurde.

An den so erhaltenen dreischichtigen Überzügen wurde die Steinschlagfestigkeit nach DBE ermittelt. Die Ergebnisse sind in Tabelle 4 aufgelistet.

Tabelle 4

| Bsp. | ET-Disp. [g] | erf.gem. Disp./Nr. [g] | U [V] | SD [μm] | ET [mm] | RI [Nm] | SST [mm] | DBE (-) [mm²/R] |
|---|---|---|---|---|---|---|---|---|
| B1 | 1974 | - | 400 | 25,1 | 6,1 | 1,1 | 1,6 | 7,0/7,5 |
| B2 | 1657 | D1 226 | 330 | 21,2 | 9,6 | 3,4 | 1,8 | 7,3/2,0 |
| B3 | 1657 | D2 240 | 370 | 22,8 | 6,9 | 3,4 | 1,8 | 4,0/3,5 |
| B4 | 1657 | D3 266 | 350 | 23,2 | 8,8 | 6,8 | 1,3 | 4,8/3,5 |
| B5 | 1657 | D4 256 | 350 | 22,3 | 8,0 | 9,1 | 1,5 | 5,3/2,0 |
| B6 | 1463 | D4 512 | 320 | 25,0 | 8,0 | 18,1 | 1,8 | 2,8/1,5 |
| B7 | 1708 | D5 281 | 400 | 24,5 | 7,0 | 5,7 | 2,0 | 5,3/3,0 |
| B8 | 1708 | D6 331 | 400 | 27,4 | 7,0 | 3,4 | 1,6 | 5,5/2,0 |

U: Abscheidespannung
SD: Schichtdicke
ET: Erichsentiefung
RI: Reverse Impact, Schlagtiefung; Bestimmung mit einem mandrel impact tester der Fa. Gardner nach ASTM D 2794
SST: 480 Stunden Salzsprühtest auf blankem Blech, Unterwanderung in mm nach DIN 50 021
DBE(-): Daimler-Benz-Einzelsteinschlagtest bei einer Prüftemperatur von -20°C; DIN 55 995, Verfahren A; Fa. Erichsen Technische Beschreibung Modell 490 (1981);

**Patentansprüche**

1. Polymere Umsetzungsprodukte, welche erhältlich sind aus

A. im Mittel 1,5 bis 3,0 primäre und/oder sekundäre Aminogruppen enthaltenden Polyoxyalkylenen mit einem mittleren Molekulargewicht $\overline{M}_n$ von 140 bis 10.000 und

B. einem Polymerisat auf Basis von konjugierten Dienen mit einem mittleren Molekulargewicht $\overline{M}_n$

EP 0 475 228 A2

von 250 bis 50.000, welches pro Molekül im Mittel von 1,5 bis 3,0 Epoxidgruppen trägt und durch Umsetzung von hydroxyl- oder carboxylgruppentragenden Polymerisaten mit Glycidylverbindungen erhältlich ist,

wobei die Menge an (A) so bemessen wird, daß pro Epoxidgruppe der Komponente (B) 1,3 bis 3,0 Aminogruppen der Komponente (A) vorhanden sind.

2. Polymere Umsetzungsprodukte nach Anspruch 1, deren Komponente (A) ein primäre Aminogruppen tragendes Polytetrahydrofuran ist, welches in $\alpha$-Stellung zur Aminogruppe eine unsubstituierte Methylengruppe enthält.

3. Polymere Umsetzungsprodukte nach Anspruch 1 und 2, deren Polymerisat auf Basis von konjugierten Dienen ein Butadien/Acrylnitril-Copolymer mit einem Acrylnitrilgehalt von 5 bis 45 Gew.-% ist.

4. Verfahren zur Herstellung von polymeren Umsetzungsprodukten gemäß einem der Ansprüche 1 bis 3, dadurch gekennzeichnet, daß man

A. im Mittel 1,5 bis 3,0 primäre und/oder sekundäre Aminogruppen enthaltende Polyoxyalkylene mit einem mittleren Molekulargewicht $\overline{M}_n$ von 140 bis 10.000 mit

B. einem Polymerisat auf Basis von Dienen mit einem mittleren Molekulargewicht $\overline{M}_n$ von 250 bis 50.000 welches pro Molekül im Mittel von 1,5 bis 3,0 Epoxidgruppen trägt und durch Umsetzung von hydroxyl- oder carboxylgruppentragenden Polymerisaten mit Glycidylverbindungen erhältlich ist,

in Gegenwart von organischen Lösungsmitteln bei 20 bis 150°C umsetzt, wobei die Menge der Komponente (A) so bemessen ist, daß pro Epoxidequivalent der Komponente (B) 1,3 bis 3,0 Aminogruppen der Komponente (A) vorhanden sind.

5. Wäßrige Dispersionen, enthaltend 15 bis 40 Gew.-% der polymeren Umsetzungsprodukte gemäß einem der Ansprüche 1 bis 4.

6. Verwendung der Dispersionen gemäß Anspruch 5 als Zusatz zu Elektrotauchlackierbädern.

7. Elektrotauchlackierbäder, enthaltend, bezogen auf den Gesamtpolymergehalt, 5 bis 30 Gew.-% der polymeren Umsetzungsprodukte, gemäß einem der Ansprüche 1 bis 4.

8. Mittels kathodischer Elektrotauchlackierung beschichteter Gegenstand, erhältlich unter Verwendung eines Elektrotauchlackierbades gemäß Anspruch 7.

**Patentansprüche für folgenden Vertragsstaat: ES**

1. Verfahren zur Herstellung von polymeren Umsetzungsprodukten, dadurch gekennzeichnet, daß man

A. im Mittel 1,5 bis 3,0 primäre und/oder sekundäre Aminogruppen enthaltende Polyoxyalkylene mit einem mittleren Molekulargewicht $\overline{M}_n$ von 140 bis 10.000 mit

B. einem Polymerisat auf Basis von Dienen mit einem mittleren Molekulargewicht $\overline{M}_n$ von 250 bis 50.000 welches pro Molekül im Mittel von 1,5 bis 3,0 Epoxidgruppen trägt und durch Umsetzung von hydroxyl- oder carboxylgruppentragenden Polymerisaten mit Glycidylverbindungen erhältlich ist,

in Gegenwart von organischen Lösungsmitteln bei 20 bis 150°C umsetzt, wobei die Menge der Komponente (A) so bemessen ist, daß pro Epoxidequivalent der Komponente (B) 1,3 bis 3,0 Aminogruppen der Komponente (A) vorhanden sind.

2. Verfahren zur Herstellung von polymeren Umsetzungsprodukten nach Anspruch 1, dadurch gekennzeichnet, daß Komponente (A) ein primäre Aminogruppen tragendes Polytetrahydrofuran ist, welches in $\alpha$-Stellung zur Aminogruppe eine unsubstituierte Methylengruppe enthält.

3. Verfahren zur Herstellung von polymeren Umsetzungsprodukten nach Anspruch 1 und 2, dadurch gekennzeichnet, daß das Polymerisat auf Basis von konjugierten Dienen ein Butadien/Acrylnitril-Copolymer mit einem Acrylnitrilgehalt von 5 bis 45 Gew.-% ist.

4. Verfahren zur Herstellung von wäßrigen Dispersionen, dadurch gekennzeichnet, daß man polymere Umsetzungsprodukte gemäß einem der Ansprüche 1 bis 3 in einem wäßrigen Medium durch vollständige oder teilweise Neutralisation der Aminogruppen mit einer Säure dispergiert.

9

5. Verfahren zur Herstellung von Elektrotauchlackierbädern, dadurch gekennzeichnet, daß man polymere Umsetzungsprodukte gemäß einem der Ansprüche 1 bis 3 in Mengen von 5 bis 30 Gew.-%, bezogen auf den Gesamtpolymergehalt als Zusatz in das Elektrotauchbad einbringt.

6. Verfahren zur Herstellung eines beschichteten Gegenstandes durch Elektrotauchlackierung, dadurch gekennzeichnet, daß man ein Elektrotauchbad gemäß Anspruch 5 verwendet.